# EUROPEAN PATENT SPECIFICATION

(11) **EP 0 364 832 B1**
(45) Date of publication and mention of the grant of the patent: **08.06.1994**
(21) Application number: 89118564.7
(22) Date of filing: 06.10.1989
(51) Int. Cl.: B65G 47/90

(54) **Catching head of apparatus for handling works such as lipstick and the like**
Greifer für Lippenstifte oder dergleichen
Tête de préhension pour crayons à lèvres ou similaire

(30) Priority: 11.10.1988 JP 255390/88
(43) Date of publication of application: 25.04.1990
(73) Proprietor: Bridgestone Corporation, Tokyo 104 (JP)
(72) Inventor: Sato, Naomi, Kodaira-shi Tokyo (JP); Watanabe, Isao, Kodaira-shi Tokyo (JP)
(74) Representative: Huss, Carl-Hans, Dipl.-Ing.

(56) References cited:
- AT-B- 339 207
- CH-A- 491 028
- DE-A- 3 405 743
- US-A- 2 308 209
- US-A- 4 498 573

## Description

The present invention relates to a catching head of a handling apparatus including a tube the inflated tubular surface of which is to catch workpieces such as lipsticks and the like according to the preambles of claims 1 and 2 (AT-A-339 207).

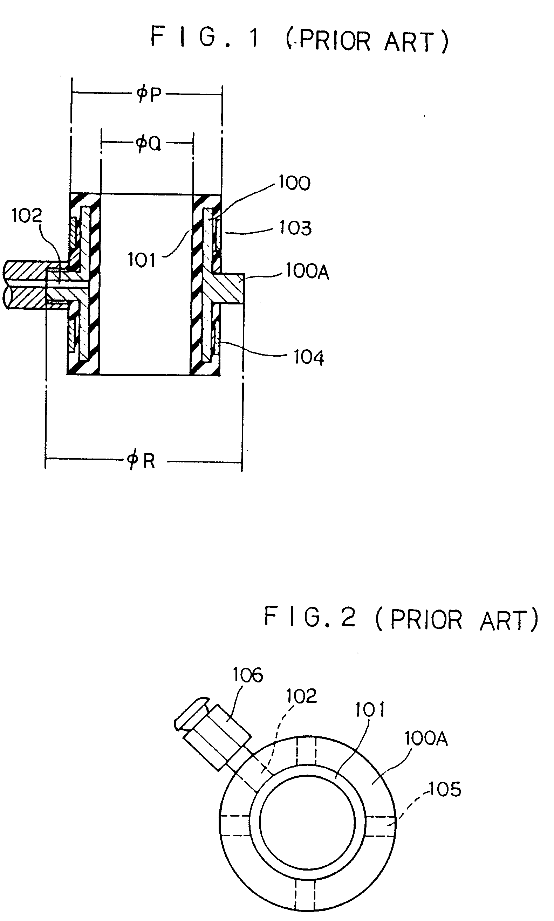

Figs. 1 and 2 show a typical conventional catching head. As seen, the catching head comprises a hard cylindrical body 100 open to both ends thereof, a tube 101 covering the inner wall of the body 100 and open at both ends thereof, and a fluid path 102 formed in the hard body 100. When a fluid such as air is supplied from the fluid path 102, the tube 101 is inflated inwardly and the inflated surface of the tube 101 catches a workpiece. Both ends of the tube 101 are folded back from inside to outside of the hard body 100 and secured to the hard body 100 with calking rings 103 and 104. The hard body 100 has flange-shaped portion 100A formed as protruded outwardly therefrom. The fluid part 102 is formed in this flange portion 100A, and also taps are formed on the flange portion 100A to install this catching head to the handling apparatus. The flange portion 100A has to be protruded at least 10 mm from the hard body 100. The catching head of the above mentioned structure is moved up and down as installed with the taps 105 to handling apparatus.

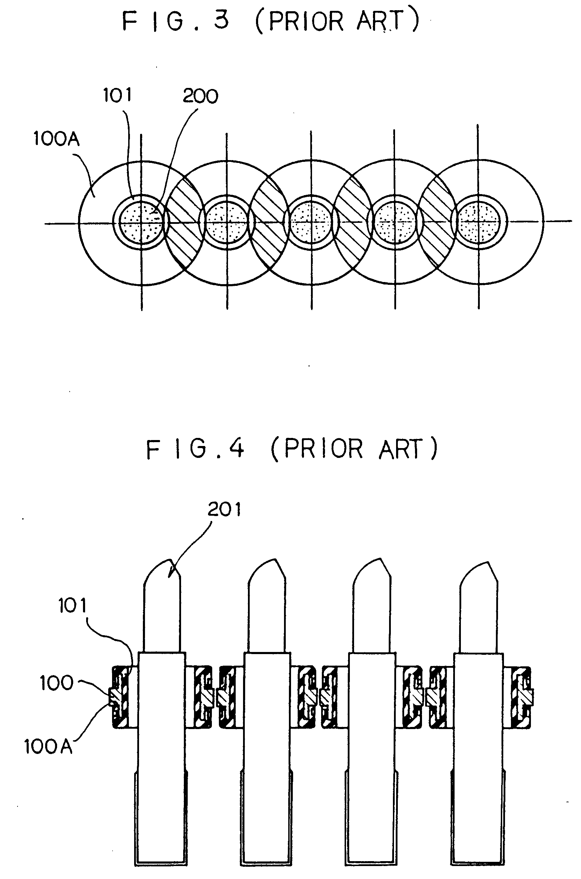

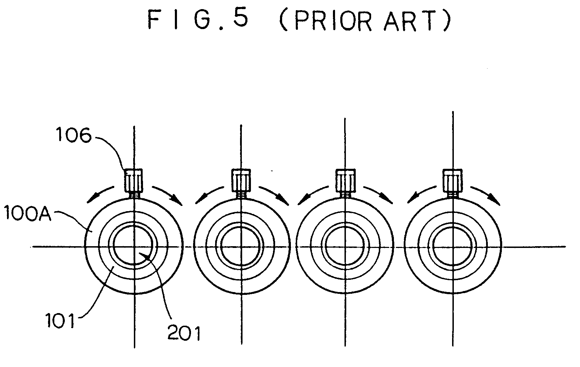

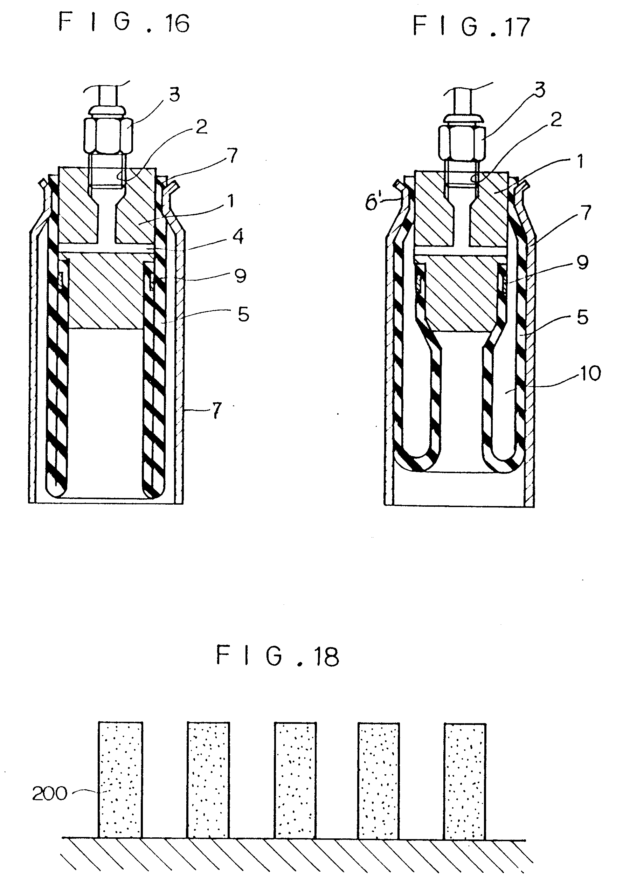

However the attempt to catch a plurality of workpieces 200 such as lipsticks as shown in Fig. 18 all at once with the catching heads shown in Figs. 1 and 2 as disposed side by side in a line will be unsuccessful unless the lipsticks are placed with sufficiently wide spacings for the catching heads to exactly face the corresponding lipsticks without interfering with each other. The outside diameter R of individual catching heads is so large that when a plurality of the catching heads is placed correspondingly to a plurality of the lipsticks disposed with narrow spacings in a line, they will theoretically overlap each other as shown as hatched in Fig. 3. Also in the conventional catching head, the flange portion 100A has to be formed and the fluid path 102 has to be formed into the flange portion 100A. So, even when it is tried to catch and rotate the lipsticks 201 for putting into their cases by the catching heads as shown in Fig. 4 the rotation is not possible as blocked by the joint 106 fixed to the fluid path 102 (see Fig. 5).

AT-A-339 207 is describing and showing a bottle gripping device having a hard body with a fluid inlet to which is fixed an outer cylinder. Within the outer cylinder is fixed on the lower part of the hard body the upper part of the pot-formed tube the lower end of which is ending in a flange inserted under the lower end of the outer cylinder without being fixed to this lower end.

US-A-2,308,209 discloses an article transferring apparatus including a catching head having a chamber inside a flexible sheath the end of which have flanges for mounting it on a body through which body air under pressure may be supplied to said chamber.

The apparatus according to AT-B-339 207 and US-A-2,308,209 have both the disadvantage that the catching flexible element is of complicated construction and has to be formed in a metal blow- or injection mold.

Therefore it has been the object of the present invention to provide a catching head of an apparatus for handling workpieces such as lipsticks which catching head is of a rather small diameter and which can be easily manufactured and which flexible catching element can be easily changed against a new one.

These objects are solved by catching head as defined in the claims. The invention is described by way of example in the following description with reference to the drawings in which represent
- Fig. 1: a sectional view showing a typical conventional catching head;
- Fig. 2: a plane view of the conventional catching head in Fig. 1;
- Fig. 3: a plane view for explanation of the inconvenience in catching workpieces shown in Fig. 18 by a plurality of the conventional catching heads;
- Fig. 4: a sectional view showing the catching of lipsticks by the conventional catching heads;
- Fig. 5: a plane view explaining the inconvenience in rotating the workpieces, shown in Fig. 4, which are caught by the conventional catching heads;
- Fig. 6: a sectional view showing a first embodiment of the present invention, into which a fluid is not yet supplied;
- Fig. 7: is a sectional view of the embodiment of Fig. 6, into which the fluid has been supplied;
- Fig. 8: is a sectional view showing a second embodiment of the present invention, in which the fluid is not yet supplied;
- Fig. 9: a sectional view of the embodiment of Fig. 8, into which the fluid has been supplied;
- Fig. 10: a sectional view showing a third embodiment, into which the fluid is not yet supplied;
- Fig. 11: a sectional view of the embodiment of Fig. 10, in which the fluid has been supplied;
- Fig. 12: a sectional view showing a fourth embodiment, in which the fluid is not yet supplied;
- Fig. 13: a sectional view of the embodiment of Fig. 12, in which the fluid has been supplied;
- Fig. 14: a sectional view showing the catching of a plurality of workpieces by a corresponding plurality of the catching heads according to the first embodiment;
- Fig. 15: a sectional view showing an example of the second embodiment in which the catching head is so arranged as to be rotatable;
- Fig. 16: a sectional view of a fifth embodiment, into which the fluid is not yet supplied;
- Fig. 17: a sectional view of the embodiment of Fig. 16, into which the fluid has been supplied;
- Fig. 18: a front view showing the lipsticks placed as narrow-spaced.

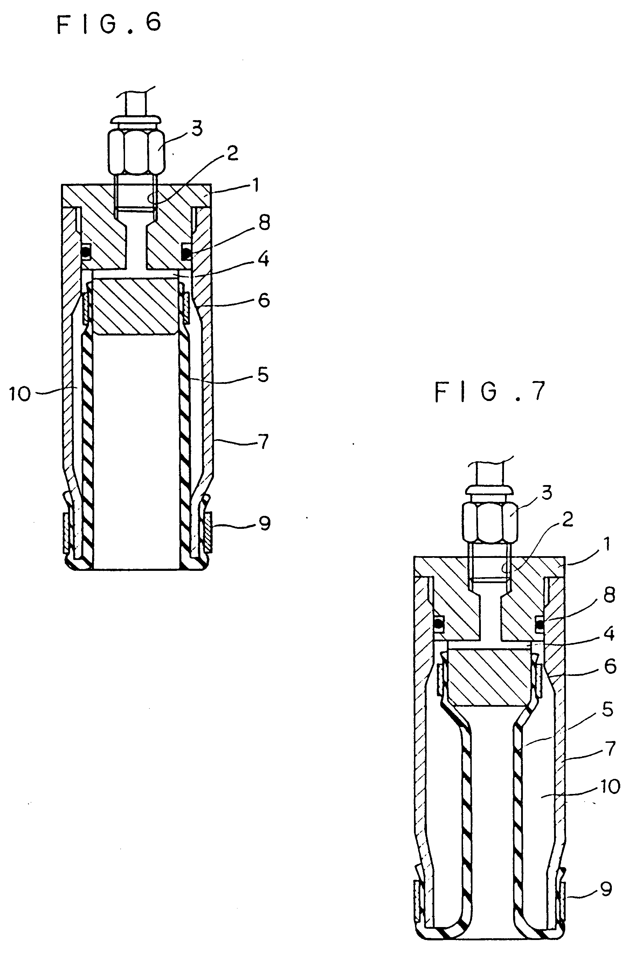

Referring now to Fig. 6 and subsequent drawings, the preferred embodiments of the present invention will be described herebelow.

As shown in Fig. 6, the catching head according to the present invention comprises a hard body 1, a fluid inlet 2 formed in a top center of the hard body 1 and to which there is fixed a joint 3 which is connected to an air compressor (not shown) by means of hose or the like, and a fluid path 4 formed in the hard body 1 as connected to the fluid inlet 2. The outside diameter of the lower end portion of the hard body 1 is designed smaller than its upper end portion. a tube 5, open at both ends is secured with its upper end to the lower end of the hard body 1 with a calking ring 6. An outer cylinder 7 open at the lower end thereof is so fixed to the upper portion of the hard body 1 as to contain the latter. An O-ring 8 for sealing is provided as interposed at the location where the outer cylinder 7 is secured to the hard body 1. The open lower end of the tube 5 is turned back outwardly from the lower end of the outer cylinder 7, and this tube end is fastened by a calking ring 9. Between the tube 5 and the outer cylinder 7 is defined a space 10 with which the fluid path 4 communicates and into which a fluid such as air can be supplied. Fig. 7 shows the space 10 supplied with the fluid through the fluid path 4 from the fluid inlet 2. As supplied with the fluid into space 10, the tube 5 is inflated inwardly to catch a work-piece by the inflated surface thereof.

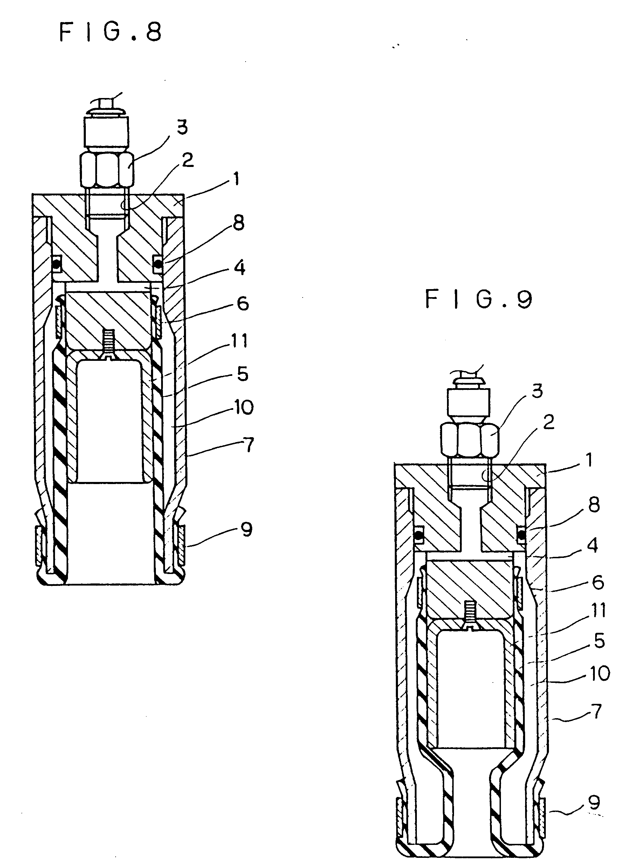

According to the second embodiment shown in Figs. 8 and 9, an inner pipe 11 is connected to the lower end of the hard body 1 of which the outside diameter is small. The rest of the structure of the catching head of the second embodiment is similar to that of the first embodiment. The inner pipe 11 is provided to prevent the tube 5 from being in contact with the lipstick body when the catching head catches a lipstick 201. Fig. 9 shows the inward inflation of the tube 5 when the fluid is supplied into the space 10 through the fluid path 4. Because of the inner pipe 11, the workpiece inserted into the inner pipe 11 will not get into contact with the tube 5.

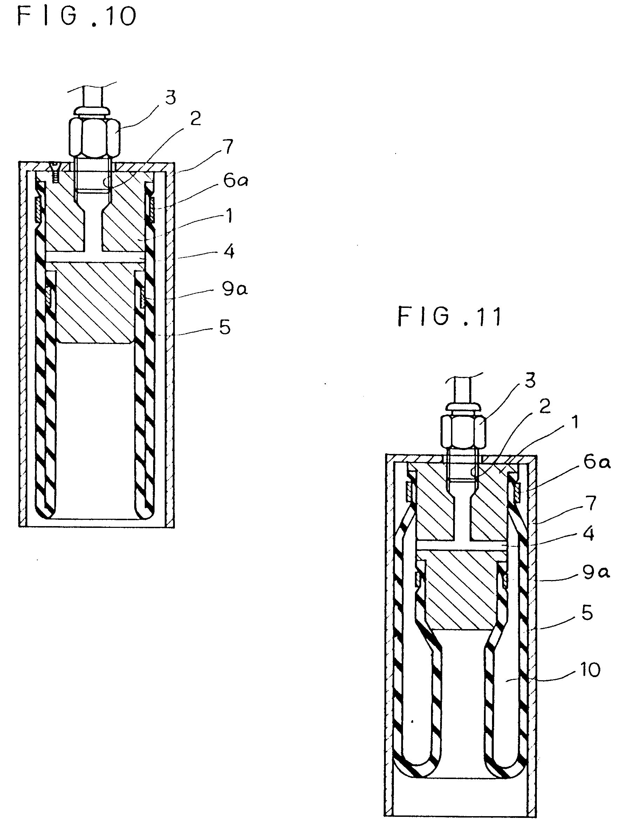

Figs. 10 and 11 show the third embodiment of the present invention. According to this embodiment the upper and bottom ends of the tube 5 are secured to the upper and lower outer ends, respectively, of the hard body 1, the tube 5 being fixed at one end thereof to the lower outer portion of the hard body 1 with the calking ring 9a, while the tube 5 thus drooping is turned back and fixed at the other end thereof to the upper outer portion of the hard body 1 with a calking ring 6a. In this embodiment, the space 10 is defined inside this turned-back tube 5.

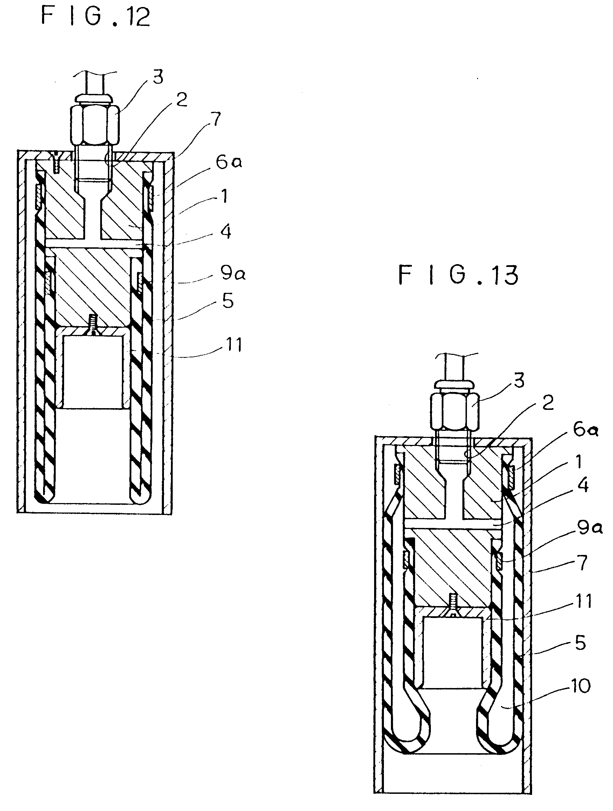

Figs. 12 and 13 show the fourth embodiment of the present invention, in which an inner pipe 11 as in the second embodiment is secured to the lower portion of the hard body 1 of the same shape as in the third embodiment. Since the rest of the structure of the catching head according to the fourth embodiment is similar to that of the third embodiment, it will not be described any more.

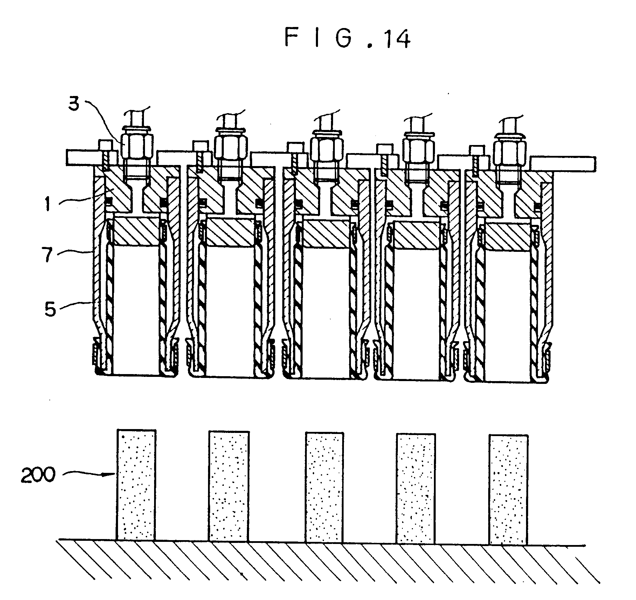

In an embodiment shown in Fig. 14, five catching heads according to the first embodiment are so arranged side by side in a line as to catch all at once the workpieces 200 placed with narrower spacings than when they would be caught by conventional catching heads.

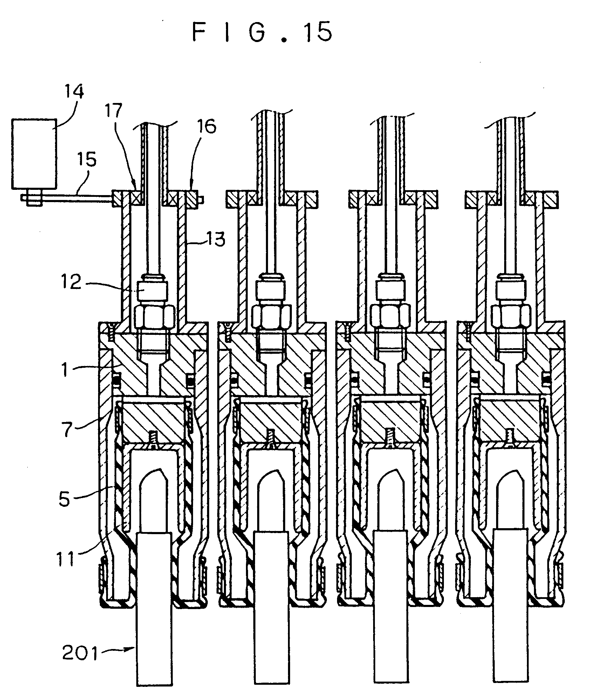

According to another embodiment shown in Fig. 15, the catching head is so constructed as to be rotatable. A rotary joint 12 is provided at the joint 3, and a rotatable cylinder 13 is provided at the top of the hard body 1. The rotation of a motor 14 is transmitted to the top end of this rotatable cylinder 13 by means of a belt or chain 15. The reference number 16 indicates a V-grooved wheel or sprocket, and 17 indicates a bearing. As seen in Fig. 15, when the entire catching head is rotated with the rotation from the motor 14 while the lipstick 201 is fixed at the base end thereof and caught at the case thereof by the inflated surface of the pipe 15, the lipstick body in the inner pipe 11 can be put into the case.

According to the fifth embodiment shown in Fig. 16, the upper end of the outer cylinder 7 is calked or beaded to secure with its bead 6', the tube 5 to the hard body 1. Fig. 17 shows tube 5 supplied with fluid in the inside space thereof.

One advantage of the catching head of the invention is that one of its main elements, namely the tube 5 is open at both ends before being fixed so that it can be easily obtained on the market by nearly cutting to a prescribed length continuous tubing which is commercially available or readily manufactured, typically by extrusion. Another advantage is that said tube is secured to the hard body 1 or to the hard body 1 and the outer cylinder 7 solely by means of a pair of calking rings 6 and 9 or 6a and 9a which are not threaded which is not expensive and simplifies the assembling of the catching head.

## Claims

1. A catching head of an apparatus for handling workpieces such as lipsticks and the like comprising a hard body (1) having a lower end, a fluid inlet (2) formed on a top face of the hard body (1), a fluid path (4) formed in said body (1) in communication with the fluid inlet (2), an outer cylinder (7) so fixed on the body (1) as to contain the latter , the outer cylinder (7) having a lower end and being open at the lower end and enclosing a cylindrical tube (5) inflatable when supplied with the fluid such as air ,
characterized in that
the tube (5) is fixed to an outer surface of the lower end of the outer cylinder (7) solely by means of a first calking ring (9) and fixed to the outer surface of the lower end of the hard body (1) solely by means of a second calking ring (6) each calking ring having an outer surface free of contact with any other surface, the first calking ring (9) having an inner surface in contact only with a first cylindrical surface portion of the tube (5), a first cylindrical segment of the tube (5) including the first cylindrical surface portion being sandwiched between the inner surface of the first calking ring (9) and the outer surface of the lower end of the outer cylinder (7), the second calking ring (6) having an inner surface in contact only with a second cylindrical surface portion of the tube (5) a second cylindrical segment of the tube (5) including the second cylindrical surface portion being sandwiched between the inner surface of the second calking ring (6) and the outer surface of the lower end of the hard body (1), the tube (5) being fully open at both ends thereof before being fixed to the hard body (1); and
a space (10) defined between the tube (5) and the outer cylinder (7), the space (10) communicating with the fluid path (4) and otherwise being closed; whereby the tube (5) inflates inwardly and grips a workpiece when a fluid such as air is supplied into the space (10) through the fluid path (4) from the fluid inlet (2).

2. A catching head of an apparatus for handling workpieces such as lipsticks and the like comprising a hard body (1) having a lower end, a fluid inlet (2) formed on a top face of the hard body (2), a fluid path (4) formed in said body (1) in communication with the fluid inlet (2), an outer cylinder (7) so fixed on the body (1) as to contain the latter, the outer cylinder (7) having a lower end and being open at the lower end and enclosing a cylindrical tube (5) inflatable when supplied with the fluid such as air,
characterized in that
the outer cylinder (7) has a lower end and is open at the lower end; that the tube (5) is fixed to an outer surface of the upper end of the hard body (1) solely by means of a first calking ring (6a); and that the tube (5) is fixed to an outer surface of the lower end of the hard body (1) solely by means of a second calking ring (9a), the tube (5) being fully open at both ends thereof before being fixed to the hard body (1); and a space (10) defined by walls of the tube (5), said space (10) communicating with the fluid path (4) and otherwise being closed; whereby the tube (5) inflates inwardly and grips a workpiece when a fluid such as air is supplied into the space (10) through the fluid path (4) from the fluid inlet (2).

3. A catching head according to claim 1 or 2,
characterized in that
the lower end portion of the hard body (1) has a diameter smaller than the diameter of the upper end portion of said body.

4. A catching head according to claim 1,
characterized in that
the calking rings (6) and (9) are each of hollow cylindrical form and of substantially rectangular axial cross section.

5. A catching head according to claim 2,
characterized in that
the calking ring (6a) is substituted by a bead (6') on the upper end of the outer cylinder (7) said bead (6') pressing the upper end of the tube (5) against the outer surface of the upper end of the hard body (1).

## Patentansprüche

1. Greifer einer Vorrichtung zum Handhaben von Werkstücken wie Lippenstifte oder dergleichen, mit einem harten Körper (1) mit einem unteren Ende, einem Fluideinlaß (2) an einer oberen Fläche des harten Körpers (1), einer Fluidbahn (4) in dem Körper (1), die in Verbindung mit dem Fluideinlaß (2) steht, einem Außenzylinder (7), der so an dem Körper (1) befestigt ist, daß er den letzteren enthält, wobei der äußere Zylinder (7) ein unteres, offenes Ende hat und einen zylindrischen Schlauch (6) einschließt, der aufblähbar ist, wenn ein Fluid wie Luft zugeführt wird,
**dadurch gekennzeichnet,**
daß der Schlauch (5) an einer Außenfläche des unteren Endes des äußeren Zylinders (7) nur mittels eines ersten Packrings (9) und an der Außenfläche des unteren Endes des harten Körpers (1) nur mittels eines zweiten Packrings (6) befestigt ist, wobei jeder Packring eine Außenfläche hat, die außer Kontakt mit einer anderen Fläche steht, daß der erste Packring (9) eine Innenfläche hat, die nur in Kontakt mit einem ersten zylindrischen Flächenabschnitt des Schlauches (5) steht, daß ein erstes zylindrisches Segment des Schlauches (5), welches den ersten zylindrischen Flächenabschnitt enthält, zwischen der Innenfläche des ersten Packrings (9) und der Außenfläche des unteren Endes des äußeren Zylinders (7) liegt, daß der zweite Packring (6) mit seiner Innenfläche nur in Kontakt mit einem zweiten zylindrischen Flächenabschnitt des Schlauches (5) steht, wobei ein zweites zylindrisches Segment des Schlauches (5), welches den zweiten zylindrischen Flächenabschnitt enthält, zwischen der Innenfläche des zweiten Packrings (6) und der Außenfläche des unteren Endes des harten Körpers (1) liegt, daß der Schlauch (5) an beiden Enden vollständig offen ist, bevor er an dem harten Körper (1) befestigt wird, und daß ein Zwischenraum (10) zwischen dem Schlauch (5) und dem äußeren Zylinder (7) gebildet ist, der mit der Fluidbahn (4) in Verbindung steht und im übrigen geschlossen ist, wobei der Schlauch (5) nach innen aufgebläht wird und ein Werkstück ergreift, wenn ein Fluid wie Luft durch die Fluidbahn (4) von dem Fluideinlaß (2) in den Zwischenraum eingeführt wird.

2. Greifer einer Vorrichtung zum Handhaben von Werkstücken wie Lippenstifte oder dergleichen, mit einem harten Körper (1) mit einem unteren Ende, einem Fluideinlaß (2) an einer oberen Fläche des harten Körpers (1), einer Fluidbahn (4) in dem Körper (1), die in Verbindung mit dem Fluideinlaß (2) steht, einem äußeren Zylinder (7), der so an dem Körper (1) befestigt ist, daß er den letzteren enthält, wobei der äußere Zylinder (7) ein unteres, offenes Ende hat und einen zylindrischen Schlauch (5) einschließt, der aufgebläht wird, wenn ein Fluid wie Luft zugeführt wird,
dadurch gekennzeichnet, daß
der äußere Zylinder (7) ein unteres Ende hat und an dem unteren Ende offen ist, daß der Schlauch (5) an einer Außenfläche des oberen Endes des harten Körpers (1) nur mittels eines ersten Packrings (6) befestigt ist, und daß der Schlauch (5) an einer Außenfläche des unteren Endes des harten Körpers (1) nur mittels eines zweiten Packrings (9a) befestigt ist, wobei der Schlauch (5) vollständig an beiden Enden offen ist, bevor er an dem harten Körper (1) befestigt wird, und daß ein Zwischenraum (10) durch Wände des Schlauches (5) gebildet ist, wobei der Zwischenraum (10) mit der Fluidbahn (4) in Verbindung steht und im übrigen geschlossen ist, wobei der Schlauch (5) nach innen aufgebläht wird und ein Werkstück ergreift, wenn ein Fluid wie Luft durch die Fluidbahn (4) von dem Fluideinlaß (2) in den Zwischenraum (10) eingeführt wird.

3. Greifer nach Anspruch 1 oder 2,
dadurch gekennzeichnet, daß der untere Endabschnitt des harten Körpers (1) einen kleineren Durchmesser hat als der obere Endabschnitt des Körpers.

4. Greifer nach Anspruch 1,
dadurch gekennzeichnet, daß die Packringe (6, 9) jeweils eine hohle zylindrische Form und einen im wesentlichen rechtwinkligen axialen Querschnitt haben.

5. Greifer nach Anspruch 2,
dadurch gekennzeichnet, daß der Packring (6a) durch eine Bördelung (6') an dem oberen Ende des äußeren Zylinders (7) ersetzt ist, wobei die Bördelung (6') das obere Ende des Schlauches (5) gegen die Außenfläche des oberen Endes des harten Körpers (1) preßt.

## Revendications

1. Tête de préhension d'un appareil pour manipuler des pièces à usiner telles que des crayons à lèvres et similaires comprenant un corps dur (1) ayant une extrémité inférieure, une entrée de fluide (2) formée sur une surface supérieure du corps dur (1), un circuit de fluide (2) formée dans ledit corps (1) en communication avec l'entrée de fluide (2), un cylindre extérieur (7) fixé sur le corps (1) de façon à contenir ce dernier, le cylindre extérieur (7) ayant une extrémité inférieure et étant ouvert à l'extrémité inférieure et renfermant un tube cylindrique (5) expansible quand y est introduit un fluide tel que de l'air,
caractérisé en ce que
le tube (5) est fixé à une surface externe de l'extrémité inférieure du cylindre extérieur (7) uniquement au moyen d'un premier anneau maté (9) et fixé à la surface externe de l'extrémité inférieure du corps dur (1) uniquement par le moyen d'un second anneau maté (6), chaque anneau maté ayant une surface externe exempte de contact avec toute autre surface, le premier anneau maté (9) ayant une surface interne en contact uniquement avec une première partie de surface cylindrique du tube (5), un premier segment cylindrique de tube (5) comportant la première partie de surface cylindrique prise en sandwich entre la surface interne du premier anneau maté (9) et la surface externe de l'extrémité inférieure du cylindre extérieur (7), le deuxième anneau maté (6) ayant une surface interne en contact uniquement avec une seconde partie de surface cylindrique du tube (5) un deuxième segment cylindrique du tube (5) comportant la deuxième partie de surface cylindrique prise en sandwich entre la surface interne du deuxième anneau maté (6) et la surface externe de l'extrémité inférieure du corps dur (1), le tube (5) étant totalement ouvert aux deux extrémités de celui-ci avant d'être fixé au corps dur (1) ; et un espace (10) défini entre le tube (5) et le cylindre extérieur (7), l'espace communiquant avec le circuit de fluide (4) et étant sinon fermé; le tube (5) se gonflant intérieurement et saisissant une pièce quand est introduit un fluide tel que de l'air dans l'espace (10) au travers du circuit de fluide (4) à partir de l'entrée de fluide (2).

2. Tête de préhension d'un appareil pour manipuler des pièces à usiner telles que des crayons à lèvres et similaires comportant un corps dur (1) ayant une extrémité inférieure, une entrée de fluide (2) formée sur une face supérieure du corps dur (2), un circuit de fluide (4) formé dans ledit corps (1) en communication avec l'entrée de fluide (2), un cylindre extérieur (7) fixé sur le corps (1) de manière à contenir ce dernier, le cylindre extérieur (7) ayant une extrémité inférieure et étant ouvert à l'extrémité inférieure et renfermant un tube cylindrique (5) expansible quand y est introduit un fluide tel que de l'air,
caractérisé en ce que
le cylindre extérieur (7) a une extrémité inférieure et est ouvert à l'extrémité inférieure ; que le tube (5) est fixé à une surface externe de l'extrémité supérieure du corps dur (1) uniquement par le moyen d'un premier anneau maté (6a) ; et en ce que le tube (5) est fixé à une surface externe de l'extrémité inférieure du corps dur (1) uniquement au moyen d'un second anneau maté (9a), le tube (5) étant totalement ouvert aux deux extrémités de celui-ci avant d'être fixé au corps dur (1) ; et un espace (10) défini par des parois du tube (5), ledit espace (10) communiquant avec le circuit de fluide (4) et étant sinon fermé; le tube (5) se gonflant intérieurement et saisissant une pièce à usiner quand est introduit un fluide tel que de l'air dans l'espace (10) au travers du circuit de fluide (4) à partir de l'entrée de fluide (2).

3. Tête de préhension selon la revendication 1 ou 2,
caractérisée en ce que
la partie de l'extrémité inférieure du corps dur (1) a un diamètre plus petit que le diamètre de la partie de l'extrémité supérieure dudit corps.

4. Tête de préhension selon la revendication 1,
caractérisée en ce que
les anneaux matés (6) et (9) sont chacun de forme cylindrique creuse et desection transversale axiale substantiellement rectangulaire.

5. Tête de préhension selon la revendication 2,
caractérisée en ce que
l'anneau maté (6a) est remplacé par un rabattement (6') sur l'extrémité supérieure du cylindre extérieur (7), ledit rabattement pressant l'extrémité supérieure du tube (5) contre la surface externe de l'extrémité supérieure du corps dur (1).
